# EUROPÄISCHE PATENTSCHRIFT

(11) **EP 1 169 597 B1**
(45) Veröffentlichungstag und Bekanntmachung des Hinweises auf die Patenterteilung: **29.10.2003**
(21) Anmeldenummer: 99968363.4
(22) Anmeldetag: 22.12.1999
(51) Int. Cl.: F16L 23/028

(54) **KUPPLUNGSVORRICHTUNG FÜR EINE SCHNELLVERBINDUNG VON SCHLAUCH- ODER ROHRFÖRMIGEN LEITUNGEN MIT EINEM ANSCHLUSSKÖRPER**
COUPLING DEVICE FOR THE QUICK-RELEASE COUPLING OF HOSE-LIKE OR TUBULAR PIPES TO A CONNECTING PART
DISPOSITIF D'ACCOUPLEMENT POUR LE RACCORD RAPIDE DE CONDUITES EN FORME DE TUYAUX FLEXIBLES OU DE TUBES COMPORTANT UN CORPS DE RACCORDEMENT

(30) Priorität: 14.04.1999 DE 19916824
(43) Veröffentlichungstag der Anmeldung: 09.01.2002
(73) Patentinhaber: Hydac Filtertechnik GmbH, 66280 Sulzbach/Saar (DE)
(72) Erfinder: WILKENDORF, Werner, D-66564 Ottweiler (DE)
(74) Vertreter: Bartels, Martin Erich Arthur
(86) Internationale Anmeldenummer: EP9910264
(87) Internationale Veröffentlichungsnummer: WO00061983

(56) Entgegenhaltungen:
- FR-A- 668 578
- US-A- 2 464 744
- US-A- 3 600 012
- PATENT ABSTRACTS OF JAPAN vol. 1995, no. 05, 30. Juni 1995 (1995-06-30) & JP 07 042885 A (SEKISUI CHEM CO LTD), 10. Februar 1995 (1995-02-10)

## Beschreibung

Die Erfindung bezieht sich auf eine Kupplungsvorrichtung für eine Schnellverbindung von schlauch- oder rohrförmigen Leitungen gemäß den Merkmalen des Oberbegriffes des Patentanspruches 1.

Kupplungsvorrichtungen dieser Art sind bekannt und in genormter Ausführung handelsüblich, siehe beispielsweise die Spezifikation zum amerikanischen SAE-Standard J 518, revidierte Fassung vom Juni 93.

Die zum Anpressen des leitungsseitigen Flansches an die Anlagefläche des Anschlußkörpers vorgesehenen Spannschrauben erstrecken sich bei den bekannten Kupplungsvorrichtungen durch Bohrungen in zwei Spannbacken hindurch. Diese haben die Form je eines Halbringes, von denen jeder eine Hälfte des Umfanges des an der Leitung befindlichen endseitigen Flansches umfaßt, wobei sich jeder dieser Halbringe an der der Stirnfläche entgegengesetzten Fläche des Flansches abstützt, wenn sich die Kupplungsvorrichtung im zusammengebauten Zustand befindet, bei dem die beiden Halbringe einen geschlossenen Flanschring bilden, der den endseitigen Flansch an der Leitung einfaßt. Die für den Durchtritt der Spannschrauben vorgesehenen Bohrungen befinden sich in vier je paarweise zueinander diametral angeordneten Eckbereichen dieses durch die Ringhälften der Spannbacken gebildeten Flanschringes.

Die bekannten Kupplungsvorrichtungen sind wegen der den äußeren Flanschring bildenden Spannbacken nicht nur sperrig, sondern wegen der Anzahl der erforderlichen Bauteile in der Herstellung teuer. Ein besonderer Nachteil besteht außerdem darin, daß der Montagevorgang bei den bekannten Kupplungsvorrichtungen mühsam und zeitraubend ist. Um die Verschraubung bei der Montage herzustellen, ist es erforderlich, die Stirnfläche des leitungsseitigen Flansches an die Anlagefläche am Anschlußkörper anzulegen und gleichzeitig beide Spannbacken am endseitigen Flansch der Leitung anliegend in solcher Position zu halten, daß die Bohrungen für die Spannschrauben auf zugeordnete Gewindebohrungen im Anschlußkörper ausgerichtet sind. Diese Vorgänge sind von einer einzigen Montageperson nur mit Schwierigkeiten durchzuführen.

Bei einer gattungsgemäßen Kupplungsvorrichtung nach der FR 668,578 A ist zwar bereits vorgeschlagen worden, zur Erleichterung der Montage die Anlagefläche des Anschlußkörpers durch den Grund einer dessen Durchlaß umgebenden Vertiefung zu bilden, in der der endseitige Flansch der Leitung so aufnehmbar ist, daß der Rand der Vertiefung eine Sicherung gegen Verschieben des Flansches in Radialrichtung bildet; allein bei der bekannten Vorrichtung ist gleichfalls ein Ring oder Halbring erforderlich, um den Flansch an der Leitung einzufassen.

Der Erfindung liegt daher die Aufgabe zugrunde, eine Kupplungsvorrichtung der gattungsgemäßen Art dahingehend weiter zu verbessern, daß sie sich durch einen einfachen Aufbau und dementsprechend geringe Herstellungskosten auszeichnet und eine Vereinfachung des Montagevorganges erlaubt.

Diese Aufgabe ist bei einer Kupplungsvorrichtung mit den Merkmalen des Patentanspruches 1 in seiner Gesamtheit gelöst. Dadurch, daß gemäß dem kennzeichnenden Teil des Patentanspruches 1 die Spannschrauben unmittelbar mit der der Stirnfläche entgegengesetzten Fläche des Flansches der Leitung zusammenwirken, können zusätzliche Flanschringe oder Teile von Flanschringen entfallen, was zum einen den Vorteil der kompakteren Bauweise mit sich bringt und zum anderen lassen sich aufgrund der verringerten Anzahl der Bauteile die Herstellkosten senken. Im Hinblick auf die verringerte Anzahl der Bauteile sind bei der Montage weniger Teile zu handhaben, was letztendlich den Montagevorgang deutlich erleichtert.

Der endseitige Flansch der Leitung am Anschlußkörper ist gleichfalls gegen Radialverschiebung gesichert, so daß eine äußere Einfassung des endseitigen Flansches der Leitung durch Spannbacken, die einen äußeren, umfassenden Flanschring bilden, nicht erforderlich ist. Der Anpreßdruck kann durch die Spannschrauben somit unmittelbar über den endseitigen Flansch der Leitung ausgeübt werden und die Spannbacken können in Wegfall kommen. Durch die im Anschlußkörper als Sitz für den endseitigen Flansch der Leitung vorgesehene Vertiefung bildet der Anschlußkörper selbst die Sicherung gegen eine Verschiebung des Flansches in Radialrichtung aus.

Die erfindungsgemäße Vorrichtung eignet sich auch für das Kuppeln solcher schlauch- oder rohrförmiger Leitungen, die mit einem Schraub-Konusanschluß versehen sind. in diesem Falle ist der in der Vertiefung des Anschlußkörpers aufzunehmende Flansch an einem als Adapter dienenden Rohrstück vorgesehen, das an seinem vom Flansch abgekehrten Ende mit der betreffenden Leitung über den Schraub-Konusanschluß verbindbar ist.

Nachstehend ist die Erfindung anhand von in der Zeichnung dargestellten Ausführungsbeispielen im einzelnen erläutert. Es zeigen:
- Fig. 1: eine auseinandergezogen gezeichnete Ansicht einer Kupplungsvorrichtung gemäß dem Stand der Technik, wobei der Anschlußkörper mit strichpunktierten Linien angedeutet ist;
- Fig. 2: eine der Fig. 1 ähnliche Ansicht eines Ausführungsbeispiels der erfindungsgemäßen Kupplungsvorrichtung;
- Fig. 3: eine gegenüber Fig. 2 in etwas größerem Maßstab und in zusammengebautem Zustand gezeichnete Ansicht des Ausführungsbeispiels der erfindungsgemäßen Kupplungsvorrichtung, wobei Anschlußkörper und zugeordneter Endteil der angeschlossenen Leitung entsprechend der Linie III - III von Fig. 2 aufgeschnitten gezeigt sind;
- Fig. 4: eine der Fig. 2 ähnliche Ansicht eines Ausführungsbeispiels mit zur Bildung eines Doppelanschlusses aneinander angebauten Anschlußkörpern und
- Fig. 5: einen Längsschnitt eines Ausführungsbeispieles für das Kuppeln von Leitungen mit Schraub-Konusanschluß.

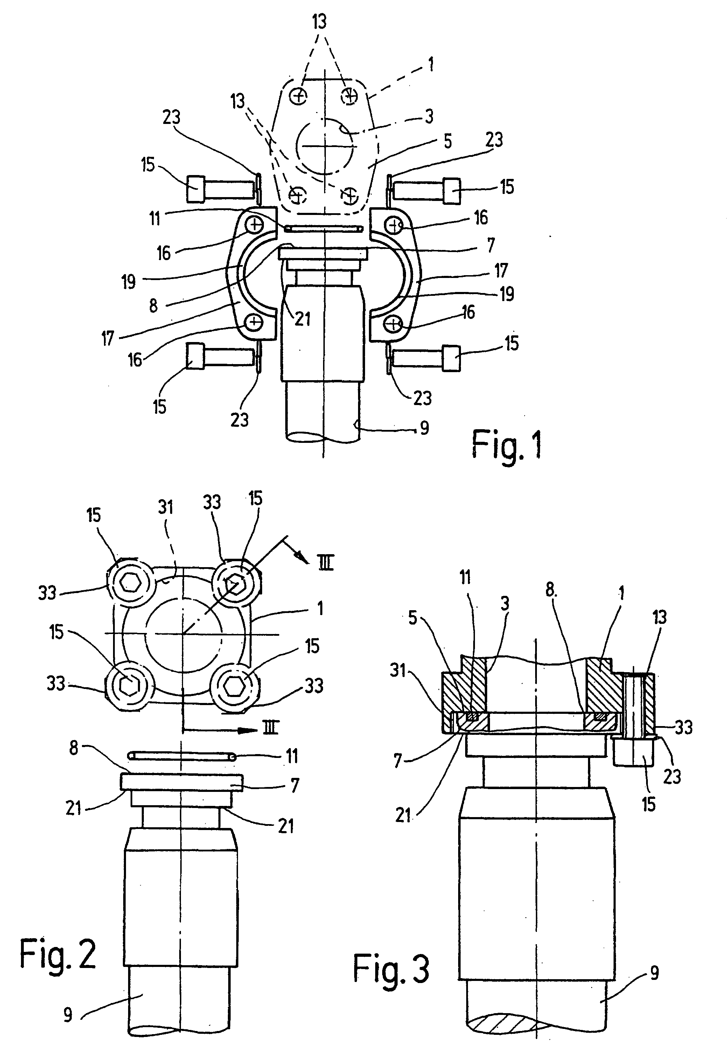

Fig. 1 zeigt eine übliche, nach dem amerikanischen SAE-Standard J 518 (revidierte Fassung vom Juni 1993) ausgebildete Kupplungsvorrichtung, bei der der mit 1 bezeichnete Anschlußkörper mit gestrichelten Linien dargestellt ist. Der Anschlußkörper 1 weist eine seinen zentralen Durchlaß 3 umgebende, ebene Anlagefläche 5 auf, an die ein Flansch 7, der das vordere Anschlußende einer Schlauchleitung 9 bildet, mit seiner ebenen vorderen Stirnfläche 8 anpreßbar ist. In der Stirnfläche 8 ist eine Vertiefung in Form einer Ringnut (in Fig. 1 nicht gezeigt) ausgebildet, in der ein Dichtelement in Form eines O-Ringes 11 aufgenommen ist.

Der Anschlußkörper 1 weist vier je paarweise diametral einander gegenüberliegende Gewindebohrungen 13 auf, in die Spannschrauben 15 einschraubbar sind, welche Durchgangslöcher 16 in zwei je gleich ausgebildeten Spannbacken 17 durchgreifen.

Fig. 1 zeigt die bekannte Kupplungsvorrichtung in auseinandergenommenem Zustand, bei dem zu ersehen ist, daß jede Spannbacke 17 eine Hälfte eines Flanschringes bildet, der vervollständigt wird, wenn beide Spannbakken 17 am Umfang des Flansches 7 der Leitung 9 so angebracht werden, daß eine halbkreisförmige Schulterfläche 19 am Innenrand jeder Spannbakke 17 an der der Stirnfläche 8 entgegengesetzten rückwärtigen Fläche 21 des Flansches 7 anliegt. Auf diese Weise bilden die Spannbacken 17 zusammen mit den Spannschrauben 15, die durch die Durchgangslöcher 16 so hindurchgesteckt sind, daß sich ihre Schraubenköpfe über Federscheiben 23 auf den Spannbacken 17 abstützen, durch Verschrauben mit den Gewindebohrungen 13 eine Spanneinrichtung, die den erforderlichen Anpreßdruck zwischen Anlagefläche 5 am Anschlußkörper 1 und Stirnfläche 8 am Flansch 7 erzeugt. Gleichzeitig sichern die Klemmbacken 17 als randseitige Einfassung des Flansches 7 diesen gegen radiales Verschieben relativ zur Achse des Durchlasses 3.

Fig. 2 und 3 zeigen ein Ausführungsbeispiel der erfindungsgemäßen Kupplungsvorrichtung. Wie aus Fig. 3 deutlich zu erkennen ist, ist die vordere Endfläche des Anschlußkörpers 1 nicht als durchgehende Planfläche ausgebildet, wie dies bei der bekannten Kupplungsvorrichtung (Fig. 1) der Fall ist, sondern die Anlagefläche 5, an die die Stirnfläche 8 des endseitigen Flansches 7 der Leitung 9 angepreßt wird, ist durch den Grund einer in das vordere Ende des Anschlußkörpers 1 eingearbeiteten Vertiefung 31 gebildet, die den Durchlaß 3 konzentrisch umgibt.

Wie aus Fig. 2 zu erkennen ist, ist der Anschlußkörper 1 in seinem Umriß im großen ganzen quadratisch, wobei jedoch die vier Eckbereiche jeweils kreisbogenförmig nach außen ausgewölbte Erweiterungen 33 besitzen. In auf den Krümmungsmittelpunkt der Erweiterungen 33 ausgerichteter Position sind Gewindebohrungen 13 (Fig. 3) in jedem Eckbereich des Anschlußkörpers 1 ausgebildet, mit denen Spannschrauben 15 verschraubbar sind, deren Köpfe über Federringe 23 unmittelbar auf die rückwärtige Fläche 21 des Flansches 7 einwirken, der in der Vertiefung 31 sitzt. Wie zu ersehen ist, entspricht der Radius der Kreisbögen der Erweiterungen 33 im wesentlichen dem Radius des Kopfes der Spannschrauben 15, so daß die Schraubenköpfe im wesentlichen der Kontur des Anschlußkörpers 1 einbeschrieben sind. Es versteht sich, daß die Verschraubung auch so ausgebildet sein könnte, daß Muttern, die auf im Anschlußkörper 1 verankerten Gewindebolzen sitzen, mit der rückwärtigen Fläche 21 des Flansches 7 zusammenwirken.

Dadurch, daß der äußere Rand der Vertiefung 31 eine seitliche Einfassung des Flansches 7 der Leitung 9 bildet, also durch den Sitz im Anschlußkörper 1 eine seitliche Lagefixierung des Flansches zur Verfügung gestellt ist, können gegebenenfalls durch das seitliche Einwirken der Spannschrauben 15 auf den Flansch 7 ausgeübte Querkräfte keinerlei in Querrichtung oder Radialrichtung erfolgende Verschiebebewegung des Flansches 7 bewirken, so daß trotz des Verzichts auf gesonderte, den Flansch 7 seitliche einfassende Spannbacken eine betriebssichere Kupplungsverbindung gewährleistet ist.

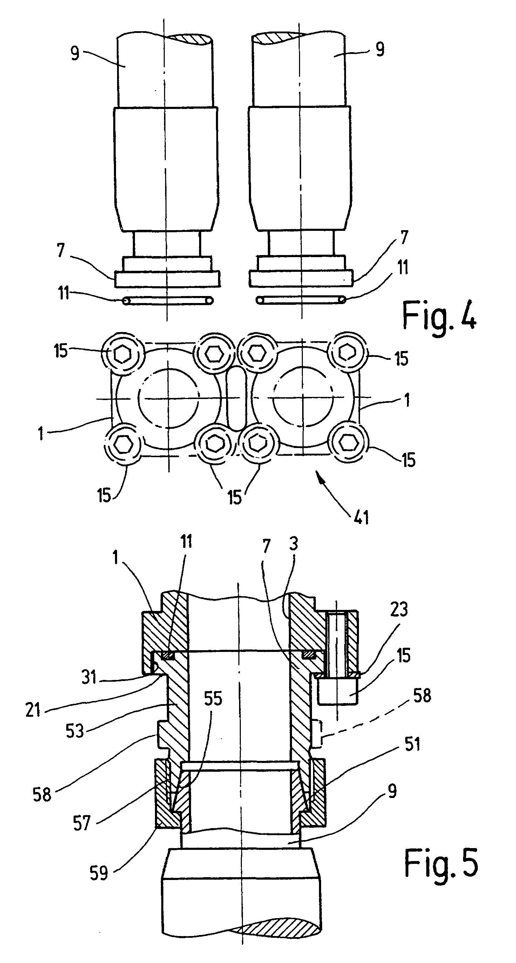

Durch den Wegfall sperriger, äußerer Spannbacken ist die erfindungsgemäße Kupplungsvorrichtung als kompakter Mehrfachanschluß auslegbar, beispielsweise in der in Fig. 4 gezeigten Art eines Doppelanschlusses 41, bei dem zwei Anschlußkörper 1 mit ihren Eckbereichen unmittelbar aneinander angrenzen. Bei solchen Ausführungsbeispielen, bei denen zwei Paare von Spannschrauben 15 mit ihren Köpfen zueinander eng benachbart sind, sind bei den Spannschrauben 15 im Hinblick auf bequeme Montierbarkeit vorzugsweise Köpfe mit Innensechskant vorgesehen. Raumsparende Mehrfachanschlüsse sind vorteilhaft bei kompakten fluidtechnischen Anlagen einsetzbar, beispielsweise bei Filtergehäusen mit dicht nebeneinander liegenden Fluidkanälen, beispielsweise für Zulauf und Abgang eines betreffenden Mediums.

Fig. 5 zeigt ein Ausführungsbeispiel für den Anschluß einer Leitung 9, die anstelle eines endseitigen Flansches einen Anschlußkonus 51 für einen Schraub-Konusanschluß aufweist. Der in der Vertiefung 31 des Anschlußkörpers 1 aufzunehmende Flansch 7 befindet sich in diesem Falle an einem als Adapter dienenden Rohrstück 53, dessen dem Flansch 7 entgegengesetztes Ende einen Innenkonus 55 und ein Außengewinde 57 aufweist, um in Zusammenwirkung mit einer Überwurfmutter 59 einen Schraub-Konusanschluß mit der Leitung 9 herzustellen. Für die Montage-Verdrehsicherung ist das Rohrstück 53 in seinem zwischen Flansch 7 und Konus 55 gelegenen Umfangsbereich mit ebenen Schlüsselflächen 58 für die Anlage eines Werkzeuges versehen. Auch bei diesem Ausführungsbeispiel erfolgt die Zusammenwirkung zwischen endseitigem Flansch 7 des als Adapter dienenden Rohrstückes 53 und dem Anschlußkörper 1 in der gleichen Weise wie vorstehend beschrieben, d.h. durch unmittelbare Zusammenwirkung der Spannschrauben 15 mit der rückwärtigen Fläche 21 des Flansches 7.

## Patentansprüche

1. Kupplungsvorrichtung für eine Schnellverbindung von schlauch- oder rohrförmigen Leitungen (9) mit einem Anschlußkörper an einem Durchlaß (3) für ein Druckfluidum, mit einer am Anschlußkörper (1) vorgesehenen Anlagefläche (5), an die die Stirnfläche (8) eines an der Leitung (9) endseitig angeordneten Flansches (7) unter Zwischenlage eines Dichtelementes (11) durch Spannschrauben (15) anpreßbar ist, die am Anschlußkörper (1) verankert sind, wobei die Anlagefläche (5) am Anschlußkörper (1) durch den Grund einer dessen Durchlaß (3) umgebenden Vertiefung (31) gebildet ist, in der der endseitige Flansch (7) der Leitung (9) so aufnehmbar ist und wobei der Rand der Vertiefung (31) eine Sicherung gegen Verschieben des Flansches (7) in Radialrichtung bildet, **dadurch gekennzeichnet, daß** die Spannschrauben (15) unmittelbar mit der der Stirnfläche (8) entgegengesetzten Fläche (21) des Flansches (7) der Leitung (9) zusammenwirken.

2. Kupplungsvorrichtung nach Anspruch 1, **dadurch gekennzeichnet, daß** die Vertiefung (31) im Anschlußkörper (1) zu dessen Durchlaß (3) konzentrisch ist und der endseitige Flansch (7) der Leitung (9) kreisrund ist.

3. Kupplungsvorrichtung nach Anspruch 1 oder 2, **dadurch gekennzeichnet, daß** der Umriß des Anschlußkörpers (1) die Form eines Quadrates besitzt, das an seinen Ecken jeweils eine kreisbogenförmig nach außen ausgewölbte Erweiterung (33) besitzt, und daß innerhalb jeder der Erweiterungen (33) eine Bohrung (13) für eine Spannschraube (15) in solcher Lagebeziehung zur Vertiefung (31) angeordnet ist, daß der Rand des in dieser sitzenden Flansches (7) vom Kopf der Spannschrauben (15) oder deren Mutter übergreifbar ist.

4. Kupplungsvorrichtung nach Anspruch 3, **dadurch gekennzeichnet, daß** die Achse der Bohrungen (13) der Spannschrauben (15) konzentrisch zum Kreisbogen der jeweiligen Erweiterung (33) ist und daß der Radius des Kreisbogens im wesentlichen dem Radius des Kopfes der Spannschrauben (15) entspricht.

5. Kupplungsvorrichtung nach einem der Ansprüche 1 bis 4, **dadurch gekennzeichnet, daß** als Dichtelement ein in einer Ringnut der Stirnfläche (8) des Flansches (7) sitzender O-Ring (11) vorgesehen ist.

6. Kupplungsvorrichtung nach einem der Ansprüche 1 bis 5, **dadurch gekennzeichnet, daß** der endseitige Flansch (7) an einem als Adapter dienenden Rohrstück (53) vorgesehen ist, das mit der schlauch- oder rohrförmigen Leitung (9) über einen Schraub-Konusanschluß (51, 55, 59) verbindbar ist.

7. Kupplungsvorrichtung nach einem der Ansprüche 1 bis 6, **dadurch gekennzeichnet, daß** der Anschlußkörper (1) an einem zu einem Filtergehäuse einer fluidtechnischen Anlage führenden Durchlaß (3) vorgesehen ist.

## Claims

1. Coupling device for rapidly connecting hose-like or tubular pipes (9) to a connecting body at a passage (3) for a hydraulic fluid with a locating face (5) at the connecting body (1) to which the end face (8) of a flange (7) arranged at the end of the pipe (9) can be pressed by means of clamping bolts (15) with a sealing element (11) located in between, the said clamping bolts being anchored to the connecting body (1), whereby the locating face (5) is formed at the connecting body (1) by the base of a recess (31) surrounding its passage (3), in which the end flange (7) of the pipe (9) can be located, and whereby the edge of the recess (31) forms a hold securing the flange (7) against radial displacement, **characterised in that** the clamping bolts (15) co-act directly with the face (21) of the flange (7) of the pipe (9) opposite the end face (8).

2. Coupling device according to Claim 1, **characterised in that** the recess (31) in the connecting body (1) is concentric to its passage (3) and the end flange (7) of the pipe (9) is circular.

3. Coupling device according to Claim 1 or 2, **characterised in that** the contour of the connecting body (1) has the shape of a square which has a circular extension (33) bulging outwards at each of its comers, and that a bore (13) for a clamping bolt (15) is arranged within each of the extensions (33) in such a position in relation to the recess (31) that the edge of the flange (7) located in it can be reached over by the head of the clamping bolts (15) or their nut.

4. Coupling device according to Claim 3, **characterised in that** the axis of the bores (13) for the clamping bolts (15) is concentric with the arc of the respective extension (33) and that the radius of the arc essentially corresponds to the radius of the head of the clamping bolts (15).

5. Coupling device according to one of the Claims 1 to 4, **characterised in that** the sealing element is an O-ring (11) located in an annular groove in the end face (8) of the flange (7).

6. Coupling device according to one of the Claims 1 to 5, **characterised in that** the end flange (7) is provided at a pipe piece (53) which is connectable to the hose-like or tubular pipe (9) by means of a thread/cone connection (51, 55, 59).

7. Coupling device according to one of the Claims 1 to 6, **characterised in that** the connecting body (1) is provided at a passage (3) leading to a filter housing of a hydraulic equipment.

## Revendications

1. Dispositif d'accouplement pour un raccord rapide de conduites en forme de tuyaux souples ou de tubes (9) avec un corps de raccordement à un passage (3) pour un fluide sous pression, avec une surface d'appui (5) prévue sur le corps de raccordement (1) contre laquelle la surface frontale (8) d'une bride (7) disposée du côté de l'extrémité dans la conduite (9) est pressée, avec un élément d'étanchéité (11) intercalé, à l'aide de vis de serrage (15) qui sont ancrées dans le corps de raccordement (1), moyennant quoi la surface d'appui (5) sur le corps de raccordement (1) est formée par le fond d'une cavité (31) entourant le passage de celui-ci (3) dans laquelle la bride (7) du côté de l'extrémité de la conduite (9) peut être logée ainsi et moyennant quoi le bord de la cavité (31) forme une sécurité contre le déplacement de la bride (7) dans la direction radiale, **caractérisé en ce que** les vis de serrage (15) coopèrent directement avec la surface (21) de la bride (7) de la conduite (9) opposée à la surface frontale (8).

2. Dispositif d'accouplement selon la revendication 1, **caractérisé en ce que** la cavité (31) dans le corps de raccordement (1) est concentrique par rapport au passage de celui-ci (3) et **en ce que** la bride du côté de l'extrémité (7) de la conduite (9) est circulaire.

3. Dispositif d'accouplement selon la revendication 1 ou 2, **caractérisé en ce que** le contour du corps de raccordement (1) présente la forme d'un carré qui comporte dans ses angles un élargissement respectif (33) en forme d'arc de cercle bombé vers l'extérieur et **en ce qu'**un alésage (13) est disposé à l'intérieur de chacun des élargissements (33) pour une vis de serrage (15) dans une position telle par rapport à la cavité (31) que la tête des vis de serrage (15) ou leur écrou peut empiéter sur le bord de la bride (7) placée dans la cavité.

4. Dispositif d'accouplement pour un raccord rapide selon la revendication 3, **caractérisé en ce que** l'axe des alésages (13) des vis de serrage (15) est concentrique par rapport à l'arc de cercle de l'élargissement respectif (33) et **en ce que** le rayon de l'arc de cercle correspond sensiblement au rayon de la tête des vis de serrage (15).

5. Dispositif d'accouplement selon l'une quelconque des revendications 1 à 4, **caractérisé en ce qu'**il est prévu un joint torique (11) logé dans une rainure annulaire de la surface frontale (8) de la bride (7) comme élément d'étanchéité.

6. Dispositif d'accouplement selon l'une quelconque des revendications 1 à 5, **caractérisé en ce que** la bride du côté de l'extrémité est prévue dans un tronçon de tube (53) servant d'adaptateur, qui peut être raccordé à la conduite en forme de tuyaux souples ou de tubes (9) par l'intermédiaire d'un raccord fileté conique (51, 55, 59).

7. Dispositif d'accouplement selon l'une quelconque des revendications 1 à 6, **caractérisé en ce que** le corps de raccordement (1) est prévu dans un passage (3) conduisant à un boîtier de filtre d'une installation fluidique.
